# FASCICULE DE BREVET EUROPEEN

(11) **EP 3 401 559 B1**
(45) Date de publication et mention de la délivrance du brevet: **28.10.2020**
(21) Numéro de dépôt: 18167202.3
(22) Date de dépôt: 13.04.2018
(51) Int. Cl.: F16F 1/373, F16B 5/02, F16B 41/00, F16B 39/02, F16B 33/00

(54) **DISPOSITIF ANTI-VIBRATION À FONCTION DE PRÉ-MAINTIEN, POUR UN DISPOSITIF FONCTIONNEL**
ANTI-VIBRATIONSVORRICHTUNG MIT VORBEFESTINGUNGSFUNKTION, FÜR EINE VORRICHTUNG.
ANTI-VIBRATION DEVICE WITH PRE-HOLD FUNCTION FOR A FUNCTIONAL DEVICE.

(30) Priorité: 12.05.2017 FR 1754177
(43) Date de publication de la demande: 14.11.2018
(73) Titulaire: PSA Automobiles SA, 78300 Poissy (FR)
(72) Inventeur: VOISIN, Jean Philippe, 90350 Evetter Salbert (FR); DELVA, Philippe, 25310 Blamont (FR); SENDER, Cyrille, 25230 Bondeval (FR)

(56) Documents cités:
- FR-A1- 3 025 846
- US-A- 1 755 590
- US-A- 3 348 444
- US-B1- 6 409 446

## Description

L'invention concerne certains dispositifs fonctionnels qui sont destinés à être solidarisés par vissage sur une paroi inclinée d'un système, et plus précisément les dispositifs anti-vibration qui assurent l'interface entre ces dispositifs fonctionnels et leur paroi inclinée de support.

On notera que l'invention concerne tout dispositif fonctionnel devant être solidarisé à une paroi inclinée, éventuellement à environ 90°, et notamment et non limitativement les boîtiers de changement de vitesses de véhicule.

Dans certains domaines, comme par exemple celui des véhicules (éventuellement de type automobile), certains dispositifs fonctionnels comprennent une partie arrière munie d'une embase comprenant des trous traversants permettant le passage de vis (ou goujons) solidarisé(e)s fixement à une paroi inclinée et destiné(e)s à permettre leur solidarisation à cette dernière. Cette solidarisation pose des problèmes car elle nécessite une phase intermédiaire de pré-maintien dans laquelle le dispositif fonctionnel n'est que temporairement supporté par les vis et donc seulement pré-maintenu avant d'être solidarisé fixement par rapport à la paroi inclinée par vissage d'écrous sur les extrémités libres des vis. Or, pendant ce pré-maintien le dispositif fonctionnel n'est pas maintenu car le technicien qui procède à son installation doit récupérer l'outil de vissage, et donc le dispositif fonctionnel a tendance à basculer par gravité vers l'avant, en particulier lorsqu'il présente un centre de gravité situé dans sa partie avant (opposée à la paroi inclinée). Il existe alors une probabilité élevée que le dispositif fonctionnel s'échappe des vis et donc chute.

La probabilité d'échappement est encore accrue lorsque le dispositif fonctionnel est solidarisé dans sa partie inférieure à des câbles de commande et/ou d'alimentation qui exercent sur lui un effort ayant tendance à le faire sortir des vis (ou goujons).

La possibilité d'échappement est également présente lorsque les trous traversants de l'embase sont préalablement équipés de dispositifs anti-vibration (ou silentblocs®) comprenant chacun une entretoise, comportant un passage traversé par l'une des vis de la paroi inclinée, et une pièce d'amortissement emmanchée sur l'entretoise et logée au moins partiellement dans un trou traversant afin de servir d'interface anti-vibration. On notera que l'entretoise comprend généralement sur une face avant trois griffes destinées à assurer son couplage initial à la pièce d'amortissement.

Afin d'éviter la survenue de cet échappement, et donc la chute du dispositif fonctionnel, on peut initialement loger un clip de pré-maintien à l'intérieur du passage de vis de l'entretoise d'au moins chaque dispositif anti-vibration logé dans un trou traversant supérieur de l'embase. Ce clip de pré-maintien comprend généralement trois pattes de clippage, destinées à permettre son couplage à l'intérieur du passage de vis, et trois griffes souples intercalées entre ces pattes de clippage et destinées à être logées entre des portions voisines d'un filet d'une vis pour pré-maintenir l'embase par rapport à cette dernière vis. Ces griffes constituent en effet des espèces de butées anti-recul propres à pré-maintenir le dispositif fonctionnel sur les vis en l'empêchant de s'échapper. La souplesse des griffes, qui est indispensable à la translation relative de la vis de pré-maintien, résulte non seulement de leur forme, mais également du matériau plastique utilisé (généralement un polyamide (comme par exemple le PA6.12)). Le document FR3025846 montre un dispositif anti-vibration ayant toutes les caractéristiques du préambule de la revendication 1.

Cependant, l'entretoise n'étant pas suffisamment bien couplée à la pièce d'amortissement, les contraintes qu'elle subit pendant le pré-maintien ont tendance à la découpler de la pièce d'amortissement si bien que le clip de pré-maintien ne peut pas assurer sa fonction.

De plus, cette solution est coûteuse car elle nécessite l'installation de clips de pré-maintien supplémentaires.

L'invention a donc notamment pour but d'améliorer la situation.

Elle propose notamment à cet effet un dispositif anti-vibration, d'une part, destiné à équiper un trou traversant d'une embase d'une partie arrière d'un dispositif fonctionnel propre à être solidarisé à une paroi inclinée par rapport à un plan horizontal, et, d'autre part, comprenant une entretoise, comprenant un passage propre à être traversé par une vis solidarisée à cette paroi, et une pièce d'amortissement, déformable, emmanchée sur l'entretoise et destinée à être logée au moins partiellement dans ce trou traversant.

Ce dispositif anti-vibration se caractérise par le fait que sa pièce d'amortissement comprend au moins une protubérance s'étendant radialement jusqu'au-dessus du passage de l'entretoise et se déformant, pendant une phase de pré-maintien de l'embase par rapport à la vis, afin d'être plaquée contre une extrémité de l'entretoise en ayant une partie terminale logée partiellement entre deux portions voisines d'un filet de la vis pour empêcher un dégagement de cette vis.

Ainsi, chaque dispositif anti-vibration assure une fonction de pré-maintien de son dispositif fonctionnel simplement et de façon sécurisée.

Le dispositif anti-vibration selon l'invention peut comporter d'autres caractéristiques qui peuvent être prises séparément ou en combinaison, et notamment :
- dans un premier mode de réalisation, sa pièce d'amortissement peut comprendre au moins trois protubérances s'étendant radialement jusqu'au-dessus du passage de l'entretoise en étant séparées les unes des autres d'un même secteur angulaire ;
- sa pièce d'amortissement peut comprendre une partie avant en forme générale de disque recouvrant une face avant de l'embase autour du trou traversant et comprenant chaque protubérance ;
   > la partie avant peut comprendre une face avant plane et placée en partie à un premier niveau, et chaque protubérance peut s'étendre au moins en partie au-delà du premier niveau ;
- l'extrémité de l'entretoise peut comprendre des dégagements en nombre égal au nombre de protubérances et logeant chacun une partie d'une protubérance correspondante ;
- dans un deuxième mode de réalisation l'extrémité de l'entretoise peut comprendre au moins trois dégagements séparés les uns des autres d'un même secteur angulaire, et la protubérance peut présenter une forme générale annulaire plane avec des ouvertures périphériques en nombre égal au nombre de parties de l'extrémité situées chacune entre deux dégagements voisins et logeant chacune l'une de ces parties de l'extrémité et une ouverture centrale entourée des ouvertures périphériques et traversée par la vis ;
- l'extrémité de l'entretoise peut comprendre sur au moins un bord définissant un dégagement une griffe orientée vers la pièce d'amortissement et couplant l'entretoise à la pièce d'amortissement ;
- dans un troisième mode de réalisation l'extrémité de l'entretoise peut comprendre une partie terminale biseautée du côté du passage, et la protubérance peut présenter une forme générale annulaire plane avec une ouverture centrale traversée par la vis et un bord interne biseauté de manière à s'appuyer étroitement contre cette partie terminale biseautée de l'extrémité de l'entretoise ;
- l'entretoise peut être munie d'un épaulement présentant une forme générale annulaire plane et plaqué étroitement contre la paroi inclinée ;
- la pièce d'amortissement peut comprendre une partie arrière en forme générale de disque recouvrant une face arrière de l'embase autour du trou traversant.

L'invention propose également un dispositif fonctionnel, d'une part, propre à être solidarisé à une paroi qui est inclinée par rapport à un plan horizontal et munie d'au moins une vis supérieure et d'au moins une vis inférieure, et, d'autre part, comprenant dans une partie arrière une embase munie de trous traversants propres à être traversés respectivement par les vis supérieure(s) et vis inférieure(s) et logeant chacun une pièce anti-vibration du type de celle présentée ci-avant.

Par exemple, un tel dispositif fonctionnel peut constituer un boîtier de changement de vitesses destiné à équiper un véhicule.

L'invention propose également un véhicule, éventuellement de type automobile, et comprenant au moins un dispositif fonctionnel du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue de côté, un exemple de réalisation d'un dispositif fonctionnel équipé de dispositifs anti-vibration selon l'invention, une fois solidarisé à des vis d'une paroi inclinée d'un système (non représenté),
- la figure 2 illustre schématiquement, dans une vue de face, du côté de sa partie arrière, le dispositif fonctionnel de la figure 1, avant sa solidarisation à une paroi de support,
- la figure 3 illustre schématiquement, dans une vue du dessus, un premier exemple de réalisation d'un dispositif anti-vibration selon l'invention, avant son couplage à un trou traversant d'un dispositif fonctionnel,
- la figure 4 illustre schématiquement, dans une vue en coupe selon l'axe AB de la figure 3, le dispositif anti-vibration de la figure 3 couplé à un trou traversant d'un dispositif fonctionnel pendant la phase de positionnement de ce dernier sur les vis d'une paroi inclinée d'un système,
- la figure 5 illustre schématiquement, dans une vue en coupe selon l'axe AB de la figure 3, le dispositif anti-vibration de la figure 3 couplé à un trou traversant d'un dispositif fonctionnel une fois ce dernier pré-maintenu sur les vis d'une paroi inclinée d'un système,
- la figure 6 illustre schématiquement, dans une vue en perspective, un premier exemple de réalisation d'une entretoise d'un dispositif anti-vibration selon l'invention (adaptée notamment à la pièce anti-vibration illustrée sur la figure 3),
- la figure 7 illustre schématiquement, dans une vue en perspective, un second exemple de réalisation d'une entretoise d'un dispositif anti-vibration selon l'invention,
- la figure 8 illustre schématiquement, dans une vue en perspective, un premier exemple de réalisation d'une pièce anti-vibration d'un dispositif anti-vibration selon l'invention (adaptée notamment à l'entretoise illustrée sur la figure 6),
- la figure 9 illustre schématiquement, dans une vue en perspective, un deuxième exemple de réalisation d'une pièce anti-vibration d'un dispositif anti-vibration selon l'invention (adaptée notamment à l'entretoise illustrée sur la figure 6),
- la figure 10 illustre schématiquement, dans une vue en perspective, un troisième exemple de réalisation d'une pièce anti-vibration d'un dispositif anti-vibration selon l'invention (adaptée notamment à l'entretoise illustrée sur la figure 6),
- la figure 11 illustre schématiquement, dans une vue en perspective, un quatrième exemple de réalisation d'une pièce anti-vibration d'un dispositif anti-vibration selon l'invention, et
- la figure 12 illustre schématiquement, dans une vue en coupe transversale, la pièce anti-vibration de la figure 11 et un exemple de réalisation d'entretoise adaptée à cette pièce anti-vibration, avant couplage.

L'invention a notamment pour but de proposer un dispositif anti-vibration DA à fonction de pré-maintien et destiné à équiper un dispositif fonctionnel DF, lui-même destiné à être solidarisé à une paroi de support PF qui est inclinée par rapport à un plan horizontal et qui fait partie d'un système.

Dans ce qui suit, on considère, à titre d'exemple non limitatif, que la paroi inclinée PF fait partie d'un véhicule, éventuellement automobile, comme par exemple une voiture. Mais l'invention n'est pas limitée à ce type d'application. En effet, un dispositif fonctionnel DF peut faire partie de n'importe quel système ayant au moins une paroi inclinée destinée à le supporter. Par conséquent, elle concerne notamment tout type de véhicule (terrestre, maritime (ou fluvial), ou aérien), tout type d'installation, y compris de type industriel, et tout matériel fabriqué en grande série (notamment les équipements électroménagers, les appareils de divertissement (ou consoles de jeux), et le mobilier).

Par ailleurs, on considère dans ce qui suit, à titre d'exemple non limitatif, que le dispositif fonctionnel DF est un boîtier de changement de vitesses d'un véhicule automobile. Mais l'invention n'est pas limitée à ce type de dispositif fonctionnel. Ainsi, dans un véhicule automobile, le dispositif fonctionnel DF pourra également être un pédalier (par exemple destiné à commander l'embrayage ou l'accélération ou encore le freinage), un boîtier comprenant au moins un module électronique, un bloc de climatisation, un réservoir de liquide (par exemple de lave-glace), ou une pièce d'habillage intérieur, par exemple.

De plus, on considère dans ce qui suit, à titre d'exemple non limitatif, que le dispositif fonctionnel DF a un centre de gravité situé dans une partie avant PV1 opposée à la paroi de support PF inclinée. Mais cela n'est pas une nécessité du fait que cela dépend notamment de l'angle d'inclinaison de la paroi de support PF par rapport au plan horizontal et de l'agencement du dispositif fonctionnel DF.

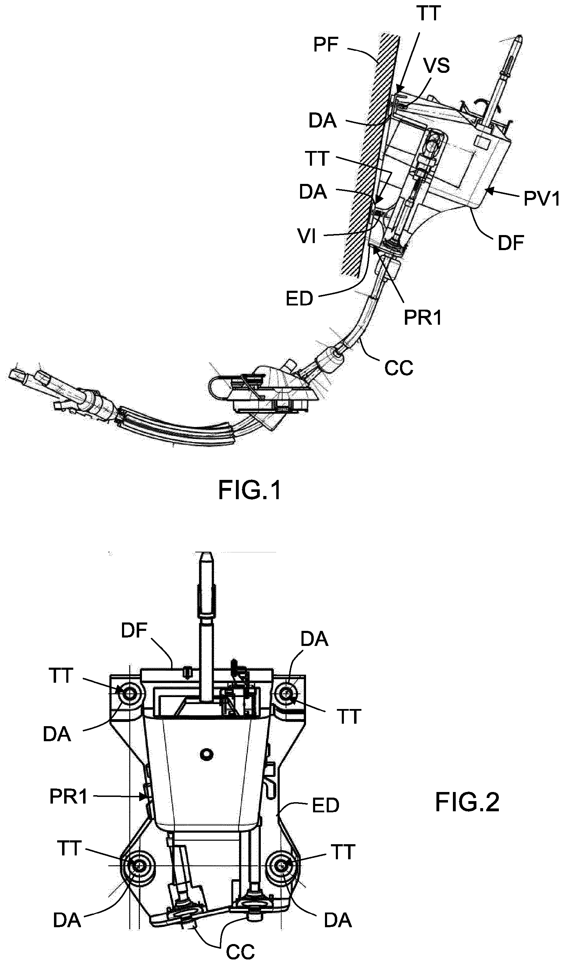

On a schématiquement représenté sur les figures 1 et 2 un exemple de dispositif fonctionnel DF selon l'invention, ici un boîtier de changement de vitesses avec ses câbles CC de commande et éventuellement d'alimentation. Ce dispositif fonctionnel DF comprend une partie avant PV1 et une partie arrière PR1 comprenant une embase ED. Dans l'exemple illustré le centre de gravité est situé dans la partie avant PV1.

L'embase ED est munie d'au moins un trou traversant supérieur TT, propre à être traversé par une vis supérieure VS correspondante solidarisée fixement à une paroi de support PF inclinée par rapport à un plan horizontal (voir figure 1), et d'au moins un trou traversant inférieur TT, propre à être traversé par une vis inférieure VI correspondante solidarisée fixement à la paroi de support PF. Ces vis supérieure(s) VS et inférieure(s) VI sont destinées à permettre la solidarisation fixe (par vissage) du dispositif fonctionnel DF sur la paroi de support PF.

Dans l'exemple illustré non limitativement sur la figure 2, l'embase ED est munie de deux trous traversants supérieurs TT et deux trous traversants inférieurs TT. Mais elle pourrait comprendre un seul trou traversant supérieur TT ou bien plus de deux trous traversants supérieurs TT (par exemple trois), et/ou un seul trou traversant inférieur TT ou bien plus de deux trous traversants inférieurs TT (par exemple trois). On comprendra que la paroi de support PF comprend autant de vis supérieures VS qu'il y a de trous traversants supérieurs TT et autant de vis inférieures VI qu'il y a de trous traversants inférieurs TT.

Dans ce qui suit et ce qui précède, la notion « d'arrière » désigne une partie ou zone d'un élément qui est orientée vers la paroi de support PF, et la notion « d'avant » désigne une autre partie ou zone de cet élément qui est orientée de façon opposée à la paroi de support PF.

Dans l'exemple illustré non limitativement sur la figure 1, la paroi de support PF est inclinée d'environ 80° par rapport à un plan horizontal qui est perpendiculaire au plan contenant les dessins et construit notamment à partir d'une direction horizontale. Mais elle peut être inclinée de n'importe quel angle inférieur ou égal à 90°.

Comme illustré, un dispositif fonctionnel DF, selon l'invention, comprend une entretoise ET et une pièce d'amortissement PA.

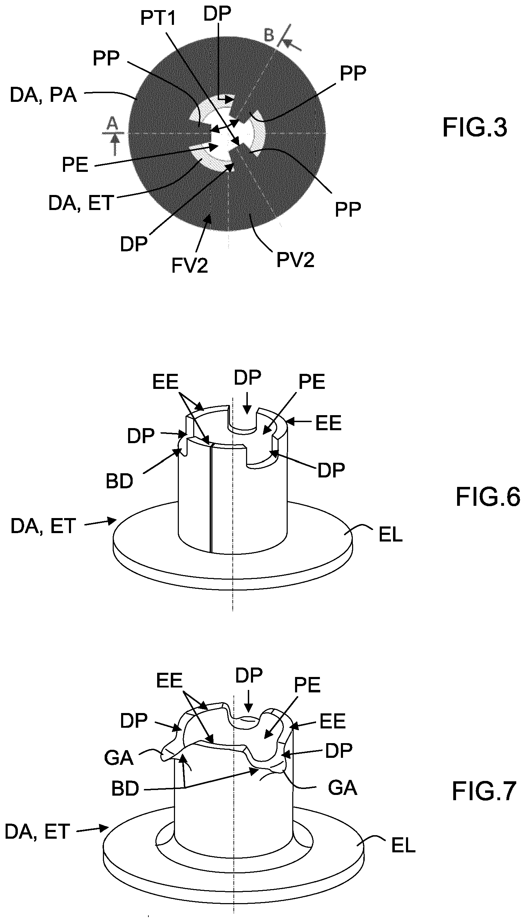

Comme cela apparaît mieux sur les figures 3 à 7 et 12, l'entretoise ET comprend une partie cylindrique creuse délimitant intérieurement un passage PE propre à être traversé par une vis inférieure VI ou supérieure VS (solidarisée à une paroi de support PF).

Le matériau dans lequel est réalisée l'entretoise ET dépend des contraintes d'utilisation et du mode de fabrication. Par exemple, elle peut être réalisée en acier, en bronze, en aluminium, en poudre métallique, ou en matière plastique. Par ailleurs, l'entretoise ET pourra être obtenue par injection, décolletage, compression de poudre, moulage, emboutissage, roulage, frappe à froid ou frappe à chaud, par exemple.

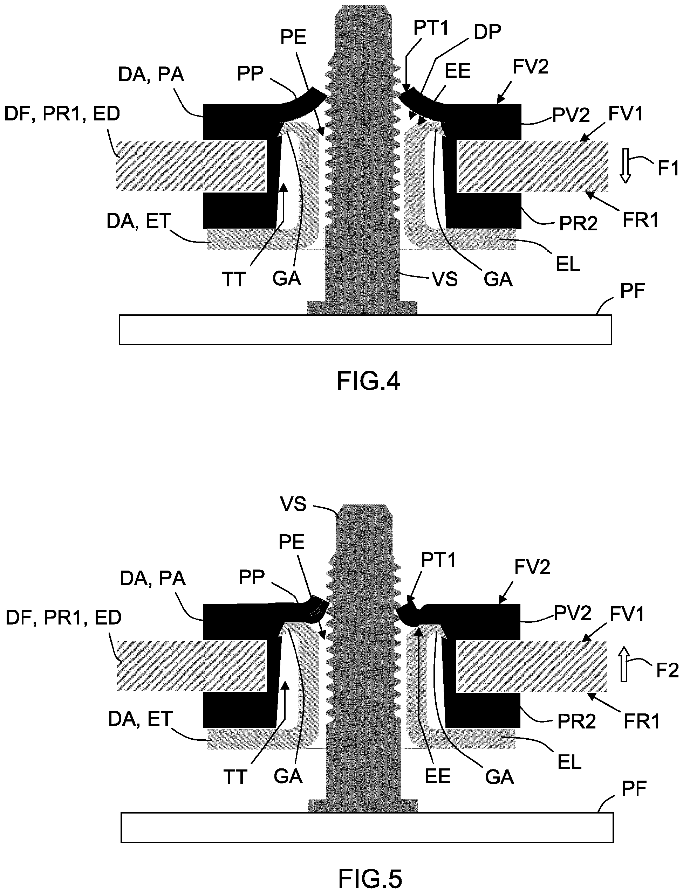

La pièce d'amortissement PA est réalisée dans un matériau déformable, comprend une partie cylindrique creuse emmanchée sur la partie cylindrique creuse de l'entretoise ET (voir figures 4 et 5), et est destinée à être logée au moins partiellement dans l'un des trous traversants TT de l'embase ED du dispositif fonctionnel DF.

Par exemple, ce matériau peut être un caoutchouc, éventuellement synthétique. Mais tout autre matériau déformable et propre à amortir (ou absorber) les vibrations peut être utilisé. D'une manière générale, le matériau est choisi en fonction des contraintes d'utilisation, des exigences d'atténuation vibratoire et des modes de fabrication. Ainsi, la pièce d'amortissement PA pourra également être réalisée en nitrile ou en EPDM (« Ethylène-Propylène-Diène Monomère »), par exemple. Par ailleurs, cette pièce d'amortissement PA pourra être obtenue par compression / vulcanisation ou bien injection, par exemple.

Il est important de noter que l'emmanchement de la pièce d'amortissement PA sur l'entretoise ET n'est pas obligatoirement réalisé en force.

Par ailleurs, la pièce d'amortissement PA comprend au moins une protubérance PP qui s'étend radialement depuis sa partie cylindrique creuse jusqu'au-dessus du passage PE de l'entretoise ET associée. On comprendra que cette extension est radiale lorsque la pièce d'amortissement PA fait partie d'un dispositif anti-vibration DA qui n'est pas encore utilisé (ce qui n'est pas le cas dans les exemples des figures 4 et 5). Le mot « radial » signifie que la (chaque) protubérance PP s'étend dans un plan qui est perpendiculaire à l'axe du passage PE et en direction de cet axe, depuis sa partie cylindrique creuse jusqu'au-dessus du passage PE.

La (chaque) protubérance PP est propre à se déformer, pendant une phase de pré-maintien de l'embase ED par rapport à la vis inférieure VI ou supérieure VS, de manière à être plaquée contre une extrémité EE de l'entretoise ET en ayant une partie terminale PT1 logée partiellement entre deux portions voisines d'un filet de cette vis inférieure VI ou supérieure VS pour empêcher un dégagement de cette dernière (VS ou VI). Cette déformation est illustrée sur la figure 5.

On comprendra que lorsqu'un technicien déplace le dispositif fonctionnel DF vers la paroi de support PF (flèche F1 de la figure 4), les extrémités avant des vis VS et VI repoussent vers l'avant les protubérances PP des dispositifs anti-vibration DA du fait qu'elles sont sur leurs trajets respectifs. La (chaque) protubérance PP présente alors une première déformation (ou courbure), comme illustré sur la figure 4. Puis, lorsque ce technicien lâche le dispositif fonctionnel DF qu'il vient de placer sur les vis VS et VI, pour se saisir des écrous et de l'outil de vissage, le dispositif fonctionnel DF bascule par gravité vers l'avant et commence à très légèrement glisser sur les vis VS et VI (flèche F2 de la figure 5), vers leurs extrémités avant, jusqu'à ce que la partie terminale PT1 de chaque protubérance PP se retrouve logée partiellement, et donc bloquée, entre deux portions voisines d'un filet de la vis VS ou VI correspondante. Il en résulte une seconde déformation (ou un arc-boutement) de chaque protubérance PP qui empêche le dispositif fonctionnel DF de se translater vers l'avant et donc le pré-maintient sur les vis VS et VI, comme illustré sur la figure 5.

Ensuite, le technicien peut placer des écrous sur les extrémités avant (libres) des vis VS et VI, du côté des faces avant FV1 des pièces d'amortissement PA des dispositifs anti-vibration DA, puis saisir son outil de vissage afin de visser ces écrous selon le couple de serrage prévu. Par exemple, le serrage des écrous peut entrainer automatiquement le redressement du dispositif fonctionnel DF et le placage de ce dernier (DF) contre la paroi de support PF.

Les dispositifs anti-vibration DA assurent donc ici, très avantageusement, non seulement une fonction d'amortissement (ou d'absorption) de vibrations, mais également une fonction de pré-maintien, sans qu'il faille utiliser des clips de pré-maintien. De plus, le blocage du dispositif fonctionnel DF étant réalisé par des protubérances PP déformables, il n'y a pas de risque d'endommagement du filet des vis VS et VI lors du pré-maintien.

De nombreux modes de réalisation de la pièce d'amortissement PA et de l'entretoise ET peuvent être envisagés. Plusieurs d'entre eux sont décrits ci-après en référence aux figures 3 à 12.

Ainsi, et comme illustré non limitativement sur les figures 3 à 5, 8 et 9, la pièce d'amortissement PA peut comprendre au moins trois protubérances PP qui s'étendent radialement jusqu'au-dessus du passage PE de l'entretoise ET en étant séparées les unes des autres d'un même secteur angulaire. On comprendra qu'en présence de trois protubérances PP, ces dernières (PP) sont séparées les unes des autres d'un secteur angulaire de 120°. En présence de quatre protubérances PP, ces dernières (PP) sont séparées les unes des autres d'un secteur angulaire de 90°. On notera que la pièce d'amortissement PA pourrait ne comprendre qu'une seule protubérance PP ou bien deux protubérances PP.

Par exemple, et comme illustré non limitativement sur les figures 3 à 5, et 8 à 12, la pièce d'amortissement PA peut comprendre une partie avant PV2 en forme générale de disque propre à recouvrir la face avant FV1 de l'embase ED autour du trou traversant TT et comprenant chaque protubérance PP. Cela permet d'améliorer la stabilisation du dispositif anti-vibration DA pendant le pré-maintien et d'augmenter la capacité d'amortissement des vibrations.

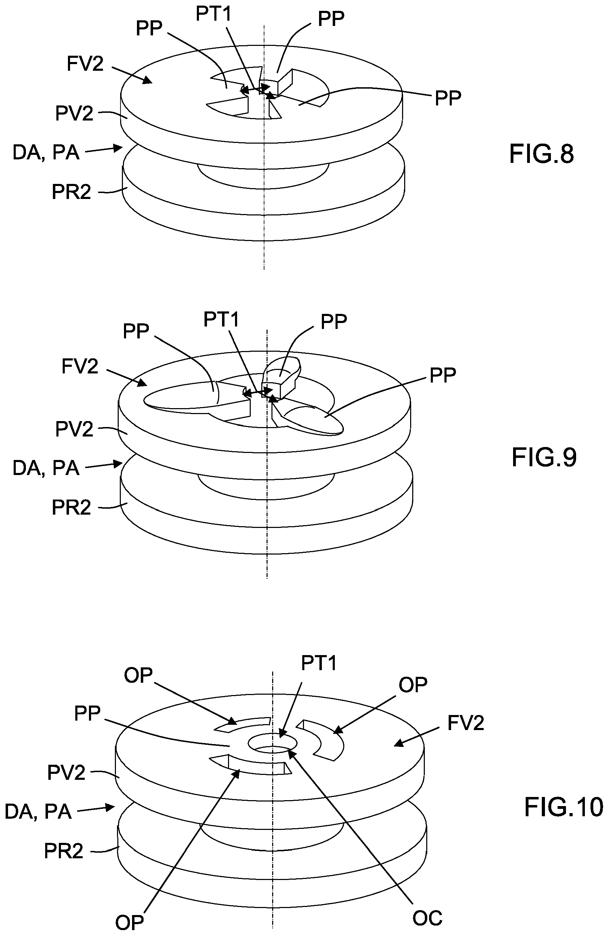

Dans ce cas, la partie avant PV2 de la pièce d'amortissement PA peut comprendre une face avant FV2 plane et placée en partie à un premier niveau, et chaque protubérance PP peut s'étendre à ce premier niveau (figure 8) ou bien au moins en partie au-delà de ce premier niveau (figure 9). Ce dernier agencement « débordant » permet de réduire la profondeur des dégagements DP décrits ci-dessous et s'avère compatible avec une réalisation classique et économique de l'entretoise ET par emboutissage et frappe à froid. En outre, la partie débordante (c'est-à-dire au-delà du premier niveau) ne perturbe pas l'assemblage du fait qu'elle s'estompe en s'écrasant sous l'écrou lors du serrage.

On notera, comme illustré non limitativement sur les figures 5 et 8 à 12, que la pièce d'amortissement PA peut également comprendre une partie arrière PR2 en forme générale de disque propre à recouvrir la face arrière FR1 de l'embase ED (opposée à sa face avant FV1) autour du trou traversant TT. Cela permet également d'améliorer la stabilisation du dispositif anti-vibration DA pendant le pré-maintien et d'augmenter la capacité d'amortissement des vibrations.

Comme évoqué ci-avant, et comme illustré non limitativement sur les figures 6 et 7, la partie cylindrique creuse de l'entretoise ET peut comprendre au niveau de son extrémité avant EE des dégagements DP en nombre égal au nombre de protubérances PP et propres chacun à loger une partie d'une protubérance PP correspondante. De tels dégagements DP peuvent, par exemple et comme illustré sur la figure 6, être obtenus par découpe d'un bord de la paroi utilisée pour définir la partie cylindrique creuse, avant que cette paroi ne soit roulée. En variante, les dégagements DP peuvent, par exemple et comme illustré sur la figure 7, être obtenus par frappe (ou emboutissage).

Les interactions entre ces dégagements DP et les protubérances PP permettent d'améliorer leur couplage pendant le pré-maintien.

On notera que lorsque l'extrémité EE de l'entretoise ET comprend au moins trois dégagements DP séparés les uns des autres d'un même secteur angulaire, la pièce d'amortissement PA peut ne comprendre qu'une unique protubérance PP présentant une forme générale annulaire plane avec des ouvertures périphériques OP et une ouverture centrale OC, comme illustré non limitativement sur la figure 10. Dans ce cas, le nombre d'ouvertures périphériques OP est égal au nombre de parties de l'extrémité EE qui sont situées chacune entre deux dégagements DP voisins, afin que chacune de ces ouvertures périphériques OP soit propre à loger l'une de ces parties de l'extrémité EE (inter-dégagements DP), et l'ouverture centrale OC est entourée par ces ouvertures périphériques OP et propre à être traversée par la vis VS ou VI.

On notera également, comme illustré non limitativement sur les figures 4, 5 et 7, que lorsque l'extrémité EE de l'entretoise ET comprend des dégagements DP, elle (EE) peut aussi comprendre sur au moins un bord BD définissant un dégagement DP une griffe GA orientée vers la pièce d'amortissement PA et propre à coupler l'entretoise ET à la pièce d'amortissement PA. On comprendra que ce couplage résulte de l'enfoncement de la griffe GA dans le matériau déformable de la pièce d'amortissement PA. Cela permet également d'améliorer la stabilisation du dispositif anti-vibration DA pendant le pré-maintien et le couplage entre l'entretoise ET à la pièce d'amortissement PA avant l'installation dans un trou traversant TT et pendant le pré-maintien.

Ces griffes GA peuvent, par exemple, être définies en même temps que leurs dégagements DP, lorsque ces derniers (DP) sont réalisés par frappe (ou emboutissage).

Dans les exemples des figures 4, 5 et 7, l'entretoise ET comprend trois griffes GA. Mais elle pourrait ne comporter qu'une seule griffe GA dans l'un de ses dégagements DP ou bien deux griffes GA dans certains de ses dégagements DP. Il n'est en effet pas obligatoire que chaque dégagement DP comporte une griffe GA.

En présence de griffe(s) GA, il peut être avantageux de prévoir dans la partie cylindrique creuse de la pièce d'amortissement PA autant de dégagements axiaux internes qu'il y a de griffes, de manière à faciliter l'emmanchement de l'entretoise ET avec sa/ses griffe(s) GA sans risque d'endommagement de la pièce d'amortissement PA. Chaque dégagement axial interne peut être en biseau, la partie la plus profonde étant située du côté de la partie arrière PR2 et la partie la moins profonde étant située du côté de la partie avant PV2, comme illustré sur les figures 4 et 5.

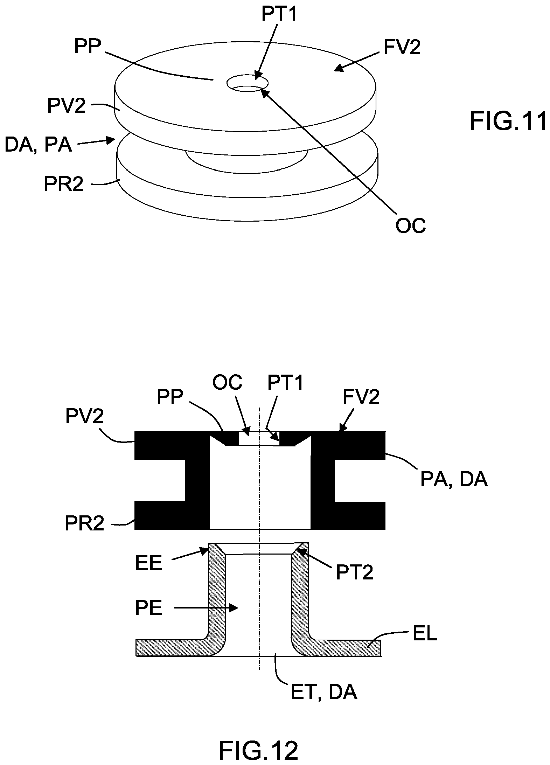

Comme illustré dans l'exemple de réalisation des figures 11 et 12, l'extrémité EE de l'entretoise ET peut comprendre une partie terminale PT2 biseautée du côté du passage PE, et une unique protubérance PP. Cette dernière (PP) présente alors une forme générale annulaire plane avec une ouverture centrale OC propre à être traversée par une vis VS ou VI et un bord interne biseauté de manière à s'appuyer étroitement contre la partie terminale PT2 biseautée de l'extrémité EE de l'entretoise ET.

Lors du serrage des écrous, la partie terminale PT2 biseautée de l'extrémité EE de l'entretoise ET écrase la partie amincie de l'unique protubérance PP (au niveau de son bord interne biseauté), et donc cette partie amincie se déchire et flue de part et d'autre de la partie terminale PT2 d'appui. Cela permet de conserver un contact franc dans les interfaces afin de ne pas dégrader le serrage de l'écrou.

On notera également, comme illustré sur les figures 4 à 7 et 12, que l'entretoise ET peut être munie d'un épaulement EL présentant une forme générale annulaire plane et propre à être plaqué étroitement contre la paroi PF inclinée. L'éventuelle partie arrière PR2 de la pièce d'amortissement PA se retrouve alors intercalée étroitement entre l'épaulement EL et la face arrière FR1 de l'embase ED. Cela permet également d'améliorer la stabilisation du dispositif anti-vibration DA pendant le pré-maintien.

De plus, l'engagement des vis VS et VI dans les trous traversants TT est facilité par le glissement de l'extrémité des vis VS et VI sur les protubérances PP et par l'effet d'entonnoir créé par le raccordement rayonné à l'entrée des trous traversants TT.

On notera également que les formes respectives des protubérances PP, de la pièce d'amortissement PA et de l'entretoise ET ne sont pas limitées. Elles peuvent en effet être choisies de manière à optimiser l'effort de retenue et/ou la compatibilité avec les dimensions du dispositif anti-vibration DA et de la vis VS ou VI et/ou faciliter le montage de l'entretoise ET dans la pièce d'amortissement PA (indexage angulaire) et/ou réaliser un pré-maintien entre l'entretoise ET et la pièce d'amortissement PA (par exemple via des griffes).

L'invention offre plusieurs avantages, parmi lesquels :
- elle permet d'obtenir une fonction de pré-maintien efficace, fiable et économique, puisqu'aucune pièce supplémentaire n'est nécessaire,
- elle permet d'avoir un pré-maintien sûr car l'effort de retenue sur la vis passe directement de la pièce d'amortissement PA à l'embase à supporter,
- elle ne nécessite pas de modification du dispositif fonctionnel ou de la paroi de support, ce qui facilite son intégration,
- elle permet d'améliorer l'ergonomie du montage du dispositif fonctionnel sur sa paroi de support, du fait des efforts réduits que le technicien doit fournir et de la sécurisation offerte.

## Revendications

1. Dispositif anti-vibration (DA) pour un trou traversant (TT) d'une embase (ED) d'une partie arrière (PR1) d'un dispositif fonctionnel (DF) propre à être solidarisé à une paroi (PF) inclinée par rapport à un plan horizontal, ledit dispositif anti-vibration (DA) comprenant une entretoise (ET), comprenant un passage (PE) propre à être traversé par une vis (VS, VI) solidarisée à ladite paroi (PF), et une pièce d'amortissement (PA), déformable, emmanchée sur ladite entretoise (ET) et destinée à être logée au moins partiellement dans ledit trou traversant (TT), **caractérisé en ce que** ladite pièce d'amortissement (PA) comprend au moins une protubérance (PP) s'étendant radialement jusqu'au-dessus dudit passage (PE) et se déformant, pendant une phase de pré-maintien de ladite embase (ED) par rapport à ladite vis (VS, VI), afin d'être plaquée contre une extrémité (EE) de ladite entretoise (ET) en ayant une partie terminale (PT1) logée partiellement entre deux portions voisines d'un filet de ladite vis (VS, VI) pour empêcher un dégagement de ladite vis (VS, VI).

2. Dispositif anti-vibration selon la revendication 1, **caractérisé en ce que** ladite pièce d'amortissement (PA) comprend au moins trois protubérances (PP) s'étendant radialement jusqu'au-dessus dudit passage (PE) en étant séparées les unes des autres d'un même secteur angulaire.

3. Dispositif anti-vibration selon la revendication 1 ou 2, **caractérisé en ce que** ladite pièce d'amortissement (PA) comprend une partie avant (PV2) en forme générale de disque recouvrant une face avant (FV1) de ladite embase (ED) autour dudit trou traversant (TT) et comprenant chaque protubérance (PP).

4. Dispositif anti-vibration selon la revendication 3, **caractérisé en ce que** ladite partie avant (PV2) comprend une face avant (FV2) plane et placée en partie à un premier niveau, et chaque protubérance (PP) s'étend au moins en partie au-delà dudit premier niveau.

5. Dispositif anti-vibration selon l'une des revendications 1 à 4, **caractérisé en ce que** ladite extrémité (EE) de l'entretoise (ET) comprend des dégagements (DP) en nombre égal au nombre de protubérances (PP) et logeant chacun une partie d'une protubérance (PP) correspondante.

6. Dispositif anti-vibration selon la revendication 1, **caractérisé en ce que** ladite extrémité (EE) de l'entretoise (ET) comprend au moins trois dégagements (DP) séparés les uns des autres d'un même secteur angulaire, et ladite protubérance (PP) présente une forme générale annulaire plane avec des ouvertures périphériques (OP) en nombre égal au nombre de parties de ladite extrémité (EE) situées chacune entre deux dégagements (DP) voisins et logeant chacune l'une de ces parties de ladite extrémité (EE) et une ouverture centrale (OC) entourée desdites ouvertures périphériques (OP) et traversée par ladite vis (VS, VI).

7. Dispositif anti-vibration selon la revendication 5 ou 6, **caractérisé en ce que** ladite extrémité (EE) de l'entretoise (ET) comprend sur au moins un bord (BD) définissant un dégagement (DP) une griffe (GA) orientée vers ladite pièce d'amortissement (PA) et couplant ladite entretoise (ET) à ladite pièce d'amortissement (PA).

8. Dispositif anti-vibration selon la revendication 1, **caractérisé en ce que** ladite extrémité (EE) de l'entretoise (ET) comprend une partie terminale (PT2) biseautée du côté dudit passage (PE), et ladite protubérance (PP) présente une forme générale annulaire plane avec une ouverture centrale (OC) traversée par ladite vis (VS, VI) et un bord interne biseauté de manière à s'appuyer étroitement contre ladite partie terminale (PT2) biseautée de ladite extrémité (EE) de l'entretoise (ET).

9. Dispositif fonctionnel (DF) propre à être solidarisé à une paroi (PF) inclinée par rapport à un plan horizontal et munie d'au moins une vis supérieure (VS) et d'au moins une vis inférieure (VI), ledit dispositif (DF) comprenant dans une partie arrière (PR1) une embase (ED) munie de trous traversants (TT) propres à être traversés respectivement par lesdites vis supérieure(s) (VS) et vis inférieure(s) (VI), **caractérisé en ce que** chaque trou traversant (TT) loge un dispositif anti-vibration (DA) selon l'une des revendications précédentes.

10. Dispositif fonctionnel selon la revendication 9, **caractérisé en ce qu'**il constitue un boîtier de changement de vitesses destiné à équiper un véhicule.

## Patentansprüche

1. Antivibrationsvorrichtung (DA) für ein Durchgangsloch (TT) einer Basis (ED) eines hinteren Teils (PR1) einer Funktionsvorrichtung (DF), die zur Befestigung an einer in Bezug darauf geneigten Wand (PF) geeignet ist in einer horizontalen Ebene umfasst die Antivibrationsvorrichtung (DA) einen Abstandshalter (ET), umfassend einen Durchgang (PE), der zum Überqueren durch eine an der Wand (PF) befestigte Schraube (VS, VI) geeignet ist, und einen Teil d 'Dämpfung (PA), verformbar, auf dem Abstandshalter (ET) angebracht und dazu bestimmt, zumindest teilweise in dem Durchgangsloch (TT) untergebracht zu werden, **gekennzeichnet dadurch, dass** der Dämpfungsteil (PA) mindestens einen Vorsprung (PP) umfasst) sich radial über den Durchgang (PE) erstrecken und sich während einer Phase des Vorhaltens der Basis (ED) in Bezug auf die Schraube (VS, VI) verformen, um gegen a gedrückt zu werden Ende (EE) des Abstandshalters (ET) mit einem Endabschnitt (PT1), der teilweise zwischen zwei benachbarten Abschnitten eines Gewindes des Abstandshalters untergebracht ist Schraube (VS, VI), um ein Lösen der Schraube (VS, VI) zu verhindern.

2. Antivibrationsvorrichtung nach Anspruch 1, **dadurch gekennzeichnet, dass** der Dämpfungsteil (PA) mindestens drei Vorsprünge (PP) aufweist, die sich radial bis zur Oberseite des Durchgangs (PE) erstrecken und voneinander getrennt sind des gleichen Winkelsektors.

3. Antivibrationsvorrichtung nach Anspruch 1 oder 2, **dadurch gekennzeichnet, dass** der Dämpfungsteil (PA) einen Vorderteil (PV2) in der allgemeinen Form einer Scheibe umfasst, die eine Vorderseite (FV1) der Basis (ED) um diese herum bedeckt Durchgangsloch (TT) und einschließlich jeder Ausstülpung (PP).

4. Antivibrationsvorrichtung nach Anspruch 3, **dadurch gekennzeichnet, dass** der vordere Teil (PV2) eine ebene Vorderseite (FV2) aufweist und teilweise auf einer ersten Ebene angeordnet ist und sich jeder Vorsprung (PP) zumindest teilweise bis zum erstreckt - jenseits der ersten Ebene.

5. Antivibrationsvorrichtung nach einem der Ansprüche 1 bis 4, **gekennzeichnet dadurch, dass** das Ende (EE) des Abstandshalters (ET) Abstände (DP) aufweist, deren Anzahl der Anzahl der Ausstülpungen (PP) und jedem Gehäuse a entspricht Teil einer entsprechenden Ausstülpung (PP).

6. Antivibrationsvorrichtung nach Anspruch 1, **dadurch gekennzeichnet, dass** das Ende (EE) des Abstandshalters (ET) mindestens drei Aussparungen (DP) umfasst, die durch denselben Winkelsektor voneinander getrennt sind, und die Ausstülpung (PP)) hat eine im Allgemeinen planare Ringform mit Umfangsöffnungen (OP), deren Anzahl der Anzahl der Teile des Endes (EE) entspricht, die sich jeweils zwischen zwei benachbarten Aussparungen (DP) befinden und in denen jeweils einer dieser Teile des Endes (EE) untergebracht ist) und eine zentrale Öffnung (OC), die von den peripheren Öffnungen (OP) umgeben und von der Schraube (VS, VI) gekreuzt ist.

7. Schwingungsdämpfungsvorrichtung nach Anspruch 5 oder 6, **gekennzeichnet dadurch, dass** das Ende (EE) des Abstandshalters (ET) an mindestens einer Kante (BD) einen Abstand (DP) aufweist, der eine Klaue (GA) definiert, die zu diesem ausgerichtet ist Dämpfungsteil (PA) und Kopplung des Abstandshalters (ET) mit dem Dämpfungsteil (PA).

8. Antivibrationsvorrichtung nach Anspruch 1, **dadurch gekennzeichnet, dass** das Ende (EE) des Abstandshalters (ET) einen an der Seite des Durchgangs (PE) abgeschrägten Endteil (PT2) aufweist und der Vorsprung (PP) eine Form aufweist im allgemeinen flach ringförmig mit einer zentralen Öffnung (OC), die von der Schraube (VS, VI) gekreuzt wird, und einer inneren abgeschrägten Kante, um eng an dem abgeschrägten Endteil (PT2) des Endes (EE) des Abstandshalters (EE) anzubringen UND).

9. Funktionsvorrichtung (DF), die zur Befestigung an einer Wand (PF) geeignet ist, die relativ zu einer horizontalen Ebene geneigt ist und mit mindestens einer oberen Schraube (VS) und mindestens einer unteren Schraube (VI) versehen ist, wobei die Vorrichtung (DF)) umfassend in einem hinteren Teil (PR1) eine Basis (ED), die mit Durchgangslöchern (TT) versehen ist, die geeignet sind, von den oberen Schrauben (VS) bzw. unteren Schrauben (VI) gekreuzt zu werden, die **dadurch gekennzeichnet** sind Jedes Durchgangsloch (TT) nimmt eine Antivibrationsvorrichtung (DA) gemäß einem der vorhergehenden Ansprüche auf.

10. Funktionsvorrichtung nach Anspruch 9, **dadurch gekennzeichnet, dass** sie ein Schaltgetriebe darstellt, das zur Montage an einem Fahrzeug vorgesehen ist

## Claims

1. Anti-vibration device (DA) for a through hole (TT) of a base (ED) of a rear part (PR1) of a functional device (DF) suitable for being secured to a wall (PF) inclined with respect on a horizontal plane, said anti-vibration device (DA) comprising a spacer (ET), comprising a passage (PE) suitable for being crossed by a screw (VS, VI) secured to said wall (PF), and a part d 'damping (PA), deformable, fitted onto said spacer (ET) and intended to be housed at least partially in said through hole (TT), **characterized in that** said damping part (PA) comprises at least one protuberance (PP) extending radially above said passage (PE) and deforming, during a phase of pre-holding said base (ED) with respect to said screw (VS, VI), in order to be pressed against a end (EE) of said spacer (ET) having an end portion (PT1) partially housed between two adjacent portions of a thread of said screw (VS, VI) to prevent disengagement of said screw (VS, VI).

2. Anti-vibration device according to claim 1, **characterized in that** said damping part (PA) comprises at least three protrusions (PP) extending radially up to the top of said passage (PE) being separated from each other of the same angular sector.

3. Anti-vibration device according to claim 1 or 2, **characterized in that** said damping part (PA) comprises a front part (PV2) in the general form of a disc covering a front face (FV1) of said base (ED) around said through hole (TT) and including each protuberance (PP).

4. Anti-vibration device according to claim 3, **characterized in that** said front part (PV2) comprises a front face (FV2) planar and partly placed at a first level, and each protuberance (PP) extends at least partly to the -beyond said first level.

5. Anti-vibration device according to one of claims 1 to 4, **characterized in that** said end (EE) of the spacer (ET) comprises clearances (DP) equal in number to the number of protuberances (PP) and each housing a part of a corresponding protuberance (PP).

6. Anti-vibration device according to claim 1, **characterized in that** said end (EE) of the spacer (ET) comprises at least three recesses (DP) separated from each other by the same angular sector, and said protuberance (PP) has a generally planar annular shape with peripheral openings (OP) equal in number to the number of parts of said end (EE) each located between two neighboring recesses (DP) and each housing one of these parts of said end (EE) and a central opening (OC) surrounded by said peripheral openings (OP) and crossed by said screw (VS, VI).

7. Anti-vibration device according to claim 5 or 6, **characterized in that** said end (EE) of the spacer (ET) comprises on at least one edge (BD) defining a clearance (DP) a claw (GA) oriented towards said damping part (PA) and coupling said spacer (ET) to said damping part (PA).

8. Anti-vibration device according to claim 1, **characterized in that** said end (EE) of the spacer (ET) comprises an end part (PT2) bevelled on the side of said passage (PE), and said protrusion (PP) has a shape generally flat annular with a central opening (OC) crossed by said screw (VS, VI) and an internal beveled edge so as to rest closely against said beveled end part (PT2) of said end (EE) of the spacer (AND).

9. Functional device (DF) suitable for being secured to a wall (PF) inclined relative to a horizontal plane and provided with at least one upper screw (VS) and at least one lower screw (VI), said device (DF) comprising in a rear part (PR1) a base (ED) provided with through holes (TT) suitable for being crossed respectively by said upper screw (s) (VS) and lower screw (s) (VI), **characterized in that** each through hole (TT) accommodates an anti-vibration device (DA) according to one of the preceding claims.

10. Functional device according to Claim 9, **characterized in that** it constitutes a gear change box intended to be fitted to a vehicle.
